# EUROPEAN PATENT APPLICATION

(11) **EP 4 748 771 A1**
(43) Date of publication of application: **27.05.2026**
(21) Application number: 24214185.1
(22) Date of filing: 20.11.2024
(51) Int. Cl.: B66C 1/10, B66C 13/02, B66C 13/08

(54) **WIND TURBINE ROTOR BLADE LIFTING ARRANGEMENT**

(71) Applicant: Siemens Gamesa Renewable Energy A/S, 7330 Brande (DK)
(72) Inventor: Steck, Christian, 22927 Großhansdorf (DE); Moeller, Jesper, 7330 Brande (DK); Roura Sues, Miguel, 28032 Madrid (ES)
(74) Representative: SGRE-Association

(57) **Abstract**

The invention describes a lifting arrangement (1) for handling a wind turbine rotor blade (20) using a crane (3), which lifting arrangement (1) comprises a lifting yoke (30) for suspending a rotor blade (20) from a crane hook (31); a sensor arrangement (10) configured to measure the spatial orientation of the lifting yoke (30); an evaluation module (121) configured to detect vertical oscillation (100Z) of the lifting yoke (30) on the basis of the sensor output (100); a response module (122) configured to compute a damping response (R1, R2) to counteract a detected vertical oscillation (100Z); and a means (33, 35) of applying the damping response (R1, R2) to the lifting yoke (30). The invention further describes a method of handling a wind turbine rotor blade (20) using a crane (3).

## Description

### Background

The rotor blade length of wind turbines has increased continually over the years, and installation costs have increased accordingly. Particularly in the case of offshore wind turbines, transport and installation costs are significant. For example, to assemble the aerodynamic rotor of an offshore wind turbine, the rotor blades are first transported to the offshore site. Each rotor blade is then lifted to hub height using a crane, for example an on-board crane of a jackup vessel or jackup rig. At hub height, a rotor blade landing system is deployed to catch and "land" the root end of the rotor blade to a pitch ring on the hub. In an established landing procedure, the rotor blade is held horizontally by a lifting yoke that is specially constructed to fit about the rotor blade's centre of mass, and various taglines extending between the yoke and the crane are deployed to stabilize the rotor blade.

In the case of long rotor blades, with a length in the order of 80 m or more, wind conditions during the landing procedure are increasingly problematic. For a long rotor blade held essentially horizontally and "flat" (i.e. with one of its two airfoil surfaces facing skyward) in a lifting yoke, wind speeds above a certain threshold generate high aerodynamic forces on the airfoil, causing the horizontally-held rotor blade to tilt up and down, making it impossible to maintain the alignment necessary for landing the rotor blade safely, i.e. within the required tolerances (chosen to avoid damage to the rotor blade landing system and exposed components such as root end bolts), even with the aid of taglines. This problem is exacerbated by increasing rotor blade length, since any vertical force acting in the outer region of the airfoil has a longer lever arm. Unfavourable wind conditions therefore increase risk of damage to the rotor blade and the hazards to which personnel are exposed. For these reasons, an offshore rotor blade landing procedure may need to be postponed for hours or even days until wind conditions are once again considered to be sufficiently safe. During that time, the installation vessel costs accrue, adding significantly to the installation costs.

It is therefore an object of the invention to provide a safe means of landing a long wind turbine rotor blade in unfavourable wind conditions.

This object is achieved by the claimed lifting arrangement and by the claimed method of handling a wind turbine rotor blade using a crane.

### Description

The lifting arrangement as claimed shall be understood as an offshore arrangement, deploying an on-board crane of an offshore jackup vessel, a jackup rig, etc. to raise a wind turbine rotor blade towards the hub of a partially assembled wind turbine. The inventive lifting arrangement is particularly suited for landing a horizontally-held rotor blade that is very long, since it allows a very long rotor blade to be safely handled even at wind speeds that would otherwise be regarded as unsafe. Here, a "very long" rotor blade shall be understood to have a length of more than 90 m, for example a length of 110 m or even more. A "horizontally-held rotor blade" shall be understood as a wind turbine rotor blade that is held with its chord plane essentially "flat", i.e. with one of its two airfoil surfaces (pressure side or suction side) facing skyward.

The invention offers an improvement to any type of lifting arrangement in which a lifting yoke, suspended from a crane hook, is deployed to hold a rotor blade in a horizontal fashion as described above. The lifting yoke shall be understood to comprise an open frame structure, with an assembly of trunnions and slings for suspending the lifting yoke from the crane hook. The lifting yoke may include one or more airfoil clamps that are shaped to fit about the rotor blade airfoil. The lifting yoke may be constructed so that, when clamped about the rotor blade and suspended from the crane hook, the centre of mass of the lifting yoke essentially coincides with the centre of mass of the horizontally-held rotor blade.

According to the invention, the lifting arrangement further comprises a sensor arrangement configured to measure the spatial orientation of the lifting yoke, and therefore also the rotor blade, during a lifting manoeuvre. The sensor arrangement can generate sensor output essentially continuously, reporting the sensed spatial orientation of the lifting yoke. The inventive lifting arrangement further comprises an evaluation module configured to analyse the sensor output and to detect vertical oscillation of the lifting yoke on the basis of the sensor output. The inventive lifting arrangement further comprises a response module which computes a damping response to counteract a detected vertical oscillation, and a means of applying the damping response to the lifting yoke. The evaluation module and response module can be realised as part of a control unit which receives the sensor output and outputs the damping response.

The inventive lifting arrangement advantageously provides a means of quickly suppressing a vertical oscillation of the lifting yoke, and therefore also of the rotor blade, for example an oscillation resulting from lift forces acting on the rotor blade airfoil. Such lift forces can result from an unexpected increased in wind speed and/or an unexpected change in wind direction during otherwise "safe" wind speed conditions, for example. The inventive lifting arrangement allows the landing procedure to continue, in contrast to the prior art, in which the landing procedure would need to be interrupted until such time as the wind conditions are once again considered to be safe.

A further advantage of the inventive lifting arrangement is that it contributes to a reduction in the Levelized Cost of Electricity (LCOE), since it allows a rotor blade landing procedure to be carried out at wind speeds that would otherwise be regarded as unsafe. In other words, the inventive lifting arrangement widens the "window" of safe wind speeds. Since a wind turbine generally has three rotor blades, and an offshore wind park may comprise many tens of wind turbines, any measure that can shorten the duration of installation can be of great benefit.

According to the invention, the method of handling a wind turbine rotor blade comprises steps of arranging a lifting yoke about the rotor blade and suspending the lifting yoke from a crane hook; providing a sensor arrangement to measure the spatial orientation of the lifting yoke during a lifting manoeuvre; evaluating the sensor output to detect vertical oscillation of the lifting yoke; computing a damping response to counteract a detected vertical oscillation; and applying the damping response to the lifting yoke during the lifting manoeuvre.

The invention further comprises a computer program product comprising a computer program that is directly loadable into a memory of a control unit of the inventive lifting arrangement, and which comprises program elements for evaluating the sensor output to detect vertical oscillation of the lifting yoke and for computing the damping response when the computer program is executed by the control unit.

Particularly advantageous embodiments and features of the invention are given by the dependent claims, as revealed in the following description. Features of different claim categories may be combined as appropriate to give further embodiments not described herein.

In the context of the invention, "safely landing a horizontally-held rotor blade" is to be understood as a landing manoeuvre in which motion of the rotor blade root end remains within the tolerances that were chosen to ensure that components of the rotor blade landing system will engage as intended, and that the root end will not collide with the front end of the nacelle. The tolerances that must be complied with during a landing manoeuvre are ultimately determined by the wind speed and the rotor blade length.

Lift forces acting on the rotor blade airfoil during a lifting manoeuvre will cause the suspended rotor blade to oscillate vertically - i.e. "up and down" - about its centre of mass, thereby resulting in a tilting motion of the lifting yoke in which its root-facing side and its tip-facing side move alternately up and down. Any suitable type(s) of sensor can be used to detect and report a vertical oscillation of the lifting yoke. In a particularly preferred embodiment of the invention, the sensor arrangement comprises an inertial measurement unit configured to detect motion in three orthogonal directions, of which the vertical or Z-axis direction is of relevance in the context of the invention. Alternatively or in addition, the sensor arrangement of the inventive lifting arrangement can comprise a number of accelerometers, gyroscopes etc., configured to detect motion at least in the Z-axis direction. Equally, a vertical oscillatory motion of the lifting yoke could be detected using an optical sensor arrangement, for example a camera arrangement mounted on the wind turbine hub or other stationary object, configured to "see" and track a visual reference on the lifting yoke.

There are various ways in which vertical oscillation of the lifting yoke could be stabilized by the inventive lifting arrangement. For example, the lifting yoke may comprise an upper level attached to the crane hook, and a lower level that grasps the rotor blade. An arrangement of hydraulic cylinders can be provided between the two levels, for example at the root-facing side and the tip-facing side of the lifting yoke, so that any vertical tilting motion of the lower level (caused by oscillation of the rotor blade) can be supressed or damped during a lifting manoeuvre. In such a realisation, the computed damping response comprises a series of piston rod references for each hydraulic cylinder, and the lifting arrangement comprises a hydraulic controller to apply these references to the cylinders.

When lifting a rotor blade by a crane and lifting yoke as described above, multiple tagline systems may be used to stabilize the lifting yoke as the rotor blade is being brought into position. A "horizontal tagline", extending essentially sideways from the lifting yoke towards the crane and a respective winch, can help to stabilize the rotor blade in a horizontal plane. A "vertical" tagline, extending essentially downward from the lifting yoke towards the crane and a respective winch, can help to stabilize the rotor blade in a vertical plane.

In a particularly preferred embodiment of the invention, the inventive lifting arrangement comprises a vertical tagline arrangement extending between the lifting yoke and the crane, with at least one vertical tagline extending between the lifting yoke and a winch mounted on a stationary body such as the crane. In a particularly preferred embodiment of the invention, the lifting arrangement comprises a first vertical tagline connected to one side (e.g. the "root-end side") of the lifting yoke and a second vertical tagline connected to the other side (the "tip-end side") of the lifting yoke. The other end of a tagline is connected to a motor-driven winch. Each vertical tagline can be controlled independently of the other vertical tagline by actuating the respective winch.

In the prior art configuration described in the introduction, the tagline winches of two vertical taglines are deployed to maintain a predetermined tagline tension. While this approach can satisfactorily stabilize a horizontally-held rotor blade with a certain maximum length as long as wind speeds are within a safe limit, it cannot keep the rotor blade stable at wind speeds beyond the safe limit and/or when the rotor blade length exceeds that maximum length.

In contrast, the inventive lifting arrangement is configured to apply a computed damping response to the respective tagline winch. In a preferred embodiment of the invention, the computed damping response comprises a series of adjustment values for each vertical tagline, wherein each adjustment value achieves essentially the opposite of a vertical displacement of the lifting yoke. For example, an upward vertical displacement of one side of the yoke is countered by a downward pulling force in the respective tagline. A specified pulling force in a tagline is generated by its winch, which winds the tagline in or out in order to achieve the desired tension. In the context of the invention, an adjustment value for a tagline shall be understood to quantify the desired value of tagline tension or pulling force. Depending on how the tagline system - comprising tagline, winch, and winch controller - is realised, an adjustment value for the winch controller may be a digital value in units of force (kN), mass (kg), etc. In a preferred embodiment, the adjustment value preferably comprises a percentage of the maximum or rated tagline tension.

Preferably, the adjustment value can be presented as a number within a minimum-to-maximum range, for example a range from 0% to 100% in which 0% represents no pulling force and 100% represents a predetermined maximum pulling force. The maximum pulling force of a tagline depends on various factors, such as maximum winch capacity, tagline minimum breaking load, wire thickness, tensile strength, etc. as will be known to the skilled person.

A vertical tagline in an exemplary configuration may require a pulling force of 5 kN in order to overcome slackness, and may be loaded up to a maximum of 20 kN by its tagline winch. In this case, the corresponding tagline winch interprets a value of 0% as 5 kN (approximately 500 kg) and interprets a value of 100% as 20 kN (approximately 2000 kg); any intermediate value is interpreted accordingly (e.g. a value of 50% is interpreted as 12.5 kN).

The evaluation unit converts any sensed change in the vertical motion of the lifting yoke into an appropriate number within this range, i.e. into an adjustment value for a tagline, so that the corresponding tagline winch will effect the desired adjustment to counteract that sensed change in the vertical motion.

For example, if the detected vertical oscillation of the lifting yoke has a peak-to-peak amplitude in the order of 1 m, part of an exemplary damping response might comprise a series of values such as "..., 150, 30%, 15%, 0%, 10%, 20%, 10%, ...", issued at appropriate intervals, instructing the respective tagline winch to alternately increase/decrease the pulling force of its tagline by amounts that will counteract or damp that oscillatory motion of the lifting yoke. A less severe oscillation of the lifting yoke can be countered by a corresponding lower damping response; a more severe oscillation of the lifting yoke can be countered by a corresponding higher damping response.

The damping response can also be computed to take other factors into consideration, for example factors such as wind speed and/or wind direction. To this end, the control unit of the inventive lifting arrangement can receive meteorological data collected, for example, at the jackup vessel and/or at the wind turbine hub. This data can be used to detect trends in wind speed and/or wind direction, so that the control unit can detect increasing wind speeds and/or a change in wind direction and can adjust the damping response accordingly. For example, if vertical oscillations of the lifting yoke have been acceptably low but the meteorological data reports a rise in wind speed beyond the safe limit, a pre-emptive damping response can be computed to counteract the expected increase in oscillation amplitude of the lifting yoke. The damping response may be combined with a further means of suppressing vertical oscillations. For example, to take into account any unintended vertical motion of the crane tip (which might develop at some point during a lifting manoeuvre), a sensor arrangement can be used to detect vertical displacement of the crane tip, and the evaluation unit can take such data into account when computing the desired damping response.

Each of two vertical taglines are controlled independently, so that the damping response comprises a first damping response for the first vertical tagline and a second damping response for the second vertical tagline. Since the vertical oscillation of the lifting yoke is essentially sinusoidal in nature, the damping response for a tagline will comprise alternately high and low pulling force adjustment values. The root-end side of the lifting yoke will move up as the tip-end side moves down, so that the damping response for the first vertical tagline will be high when the second damping response for the second vertical tagline is low, and vice versa.

In a preferred embodiment of the invention, the damping response is computed to reduce vertical oscillation of the lifting yoke towards a target parameter, for example towards an acceptable maximum amplitude of vertical oscillation of the root end. The maximum acceptable amplitude of root end oscillation may depend on the type of landing system being used. For example, the landing system may comprise an outwardly extending arm installed in the open root end of the blade, and shaped to enter a corresponding aperture in a cover plate of the pitch system, or vice versa. An acceptable vertical oscillation amplitude will depend to some extent on the physical realisation of the landing system. Equally, the target parameter can be a maximum vertical oscillation amplitude of the lifting yoke, a maximum vertical inclination angle of the lifting yoke, or any other suitable parameter which can be measured directly by the sensor arrangement or which can be inferred from the sensor output.

The target parameter used to determine the damping response can be a maximum vertical oscillation amplitude of the lifting yoke; a maximum vertical oscillation amplitude of the rotor blade root end; a maximum vertical inclination angle of the lifting yoke, etc., and may be chosen depending on the type of sensor(s) deployed in the sensor arrangement.

A vertical tagline can extend in an essentially downward or vertical direction from the lifting yoke to a tagline winch mounted at the base of the crane, or to a tagline winch mounted to the crane at a height above the wind turbine hub height. In the context of such a configuration, the expression "essentially vertical direction" can cover a relatively large angular range, for example a range in the order of 0° - 30°, since the crane hook (and lifting yoke) are some distance outward from the base of the crane. Of course, a configuration is possible in which the tagline winches can be arranged further outward from the base of the crane to position them essentially underneath the crane hook and lifting yoke.

A vertical tagline can extend directly from the lifting yoke to its winch. Alternatively, the tagline can pass over a deflection roller mounted on the crane. For example, a deflection roller can be installed on the crane at a height above hub height, and the winch can be mounted at the level of the crane pedestal. Equally, this configuration can be reversed, so that the winch is installed high up on the crane, and the deflection roller is mounted at the base of the crane. Either way, any pulling force exerted by the tagline on the lifting yoke acts in an essentially vertical direction. Regardless of the chosen configuration, it shall be understood that the downward pulling force exerted by a vertical tagline can be expressed as a vector with a vertical component and a horizontal component, wherein the vertical component always exceeds the horizontal component.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a partially assembled offshore wind turbine;
Figure 2 illustrates a known rotor blade lifting procedure using the crane of Figure 1;
Figure 3 shows an embodiment of the inventive lifting arrangement;
Figure 4 illustrates a tagline response determined by the inventive method;
Figure 5 illustrates oscillation of the lifting yoke of Figure 2;
Figure 6 - 8 show further possible embodiments of the inventive lifting arrangement.

In the diagrams, like numbers refer to like objects throughout. Objects in the diagrams are not necessarily drawn to scale.

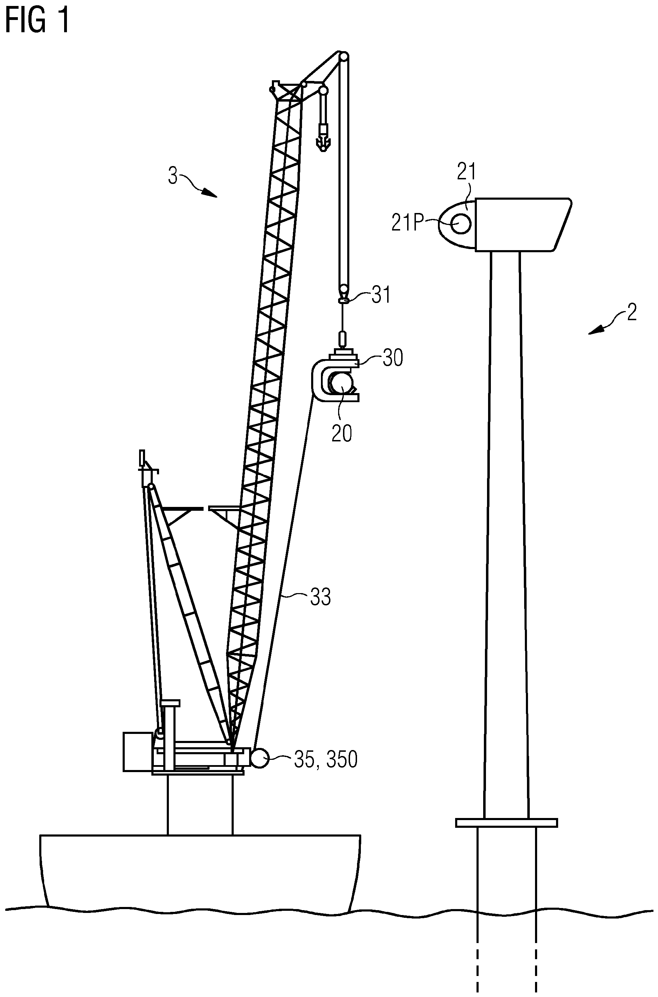

Figure 1 shows a partially assembled offshore wind turbine 2. A jackup vessel has transported wind turbine components to the offshore site, and a rotor blade 20 is being hoisted by a crane 3 of the jackup vessel towards the hub 21 of the wind turbine 2.

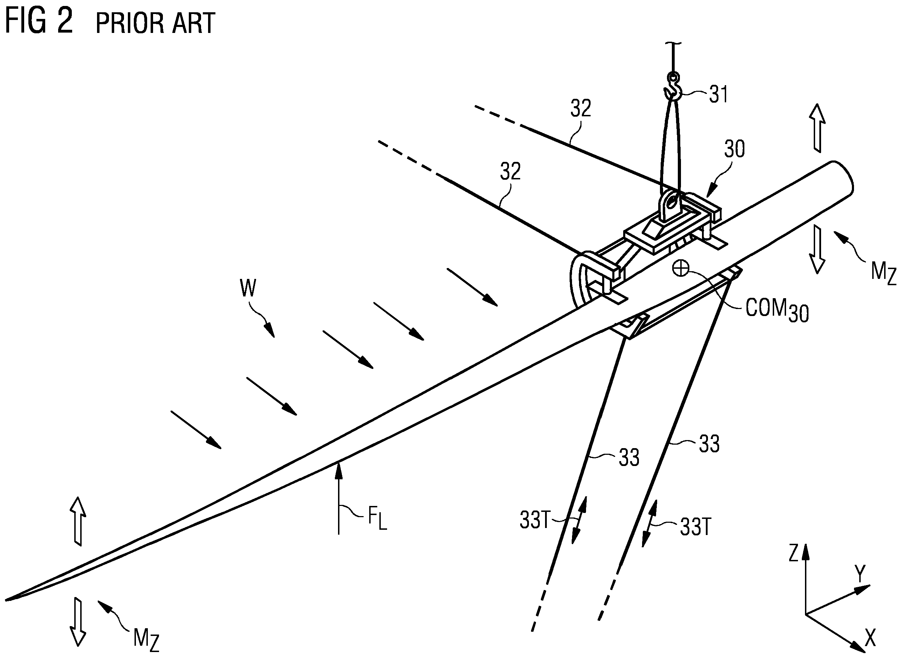

Figure 2 illustrates a known rotor blade lifting procedure using the crane 3 of Figure 1. Here, a rotor blade 20 is held by a lifting yoke 30, which in turn is suspended from a crane hook 31. The crane's is deployed to hoist the lifting yoke 30 (and therefore also the rotor blade 20) towards hub height, moving through the indicated coordinate system. A set of "horizontal" taglines 32 is used to stabilize the lifting yoke as the rotor blade is moved through the X-Y plane towards its pitch ring 21P at the hub 21. Within a certain wind speed range, the configuration of Figure 2 can smoothly and very accurately align the rotor blade root with its pitch ring 21P.

However, strong winds W can lead to fluctuating lift forces F_{L} acting along the span of the rotor blade 20, causing the rotor blade 20 to tilt, for example about the centre of mass COM₃₀ of the lifting yoke 30. Two "vertical" taglines 33, each extending from the yoke 30 to a winch 35 at the base of the crane 3, are deployed to stabilize the lifting yoke 30 in the vertical or Z direction, by paying out or retracting the taglines 33 to maintain a predetermined tension 33T. This effect is essentially "passive" in that it primarily relies on the inherent stiffness of the vertical taglines 33 to keep the lifting yoke 30 steady as it moves upward. Beyond a previously established wind speed limit, the vertical taglines 33 are unable to satisfactorily stabilize the lifting yoke 30 against oscillating vertical movements M_{Z}, making it impossible to "land" the rotor blade 20 safely in such wind conditions. The known approach can therefore only be used within the established wind speed limit.

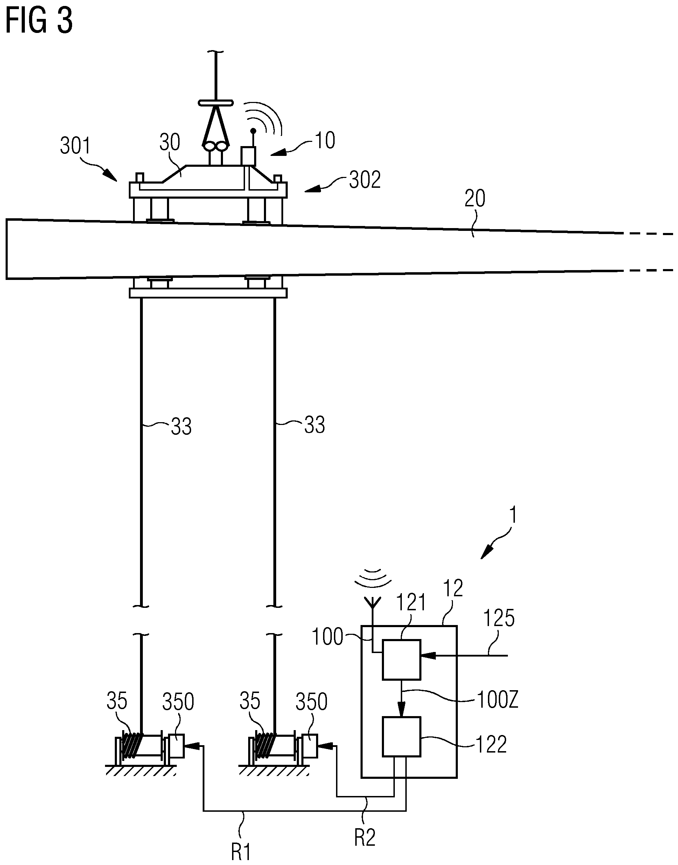

Figure 3 shows an embodiment of the inventive lifting arrangement 1. The configuration is a further development of that shown in Figure 2, with the same crane 3, lifting yoke 30, vertical taglines 33 and winches 35 installed at the base of the crane 3. The diagram also indicates a winch drive unit 350 (e.g. an electrical motor) for each winch 35.

However, instead of simply actuating the winches 35 of the vertical taglines 33 to maintain a predetermined tension as shown in Figure 2, the inventive lifting arrangement 1 actively damps any vertical oscillation M_{Z} of the lifting yoke 30 about a fulcrum such as its centre of mass. To this end, the inventive lifting arrangement 1 has a sensor arrangement 10 installed on the lifting yoke 30, and a control arrangement 12 configured to evaluate the sensor output 100. In this exemplary embodiment, the sensor arrangement 10 can transmit its output 100 over a wireless connection to the control arrangement 12. The sensor arrangement 10 is configured to measure and report motion - specifically up-down motion M_{Z} - of the lifting yoke 30, continually or at suitably spaced intervals. The control arrangement 12 has an evaluation module 121 which analyses the received sensor output 100 to extract a vertical oscillation component 100Z in the lifting yoke motion.

Such a vertical oscillation component can comprise the vertical oscillation component of the root-end side 301 of the lifting yoke 30 as well as the vertical oscillation component of the tip-end side 302 of the lifting yoke 30; alternatively the evaluation module 121 may identify only the vertical oscillation component of one side of the lifting yoke 30 (for example the root-end side 301), and the vertical oscillation component of the other side of the lifting yoke can be assumed to be opposite in sign and similar in magnitude. Preferably, the sensor arrangement and evaluation module are configured to eliminate any relative motion of the lifting yoke form the vertical oscillation component, i.e. to eliminate any up/down motion of the lifting yoke relative to a stationary reference. For example, the sensor arrangement 10 and evaluation module 121 can be configured to take into account any relative motion in the Z-direction arising from elasticity of the crane lifting tackle (cables, wires, slings etc. between lifting yoke and crane tip).

If a vertical oscillation component 100Z is detected, a response computation module 122 computes the tagline tension adjustments R1, R2 that are required to counteract the vertical oscillation. The winch 35 of a vertical tagline 33 applies the respective pulling force adjustment R1, R2, retracting or paying out its tagline 33 as appropriate in order to apply the desired damping response. A tagline response R1, R2, as explained above, can be a series of percentages, alternately increasing and decreasing within a predetermined range. The winch drive unit 350 can be configured to convert an adjustment value into a control signal (e.g. a voltage) that actuates the winch 25 to effect the desired pulling force adjustment; alternatively the response module 122 may convert each adjustment value R1, R2 into a suitable voltage or other control signal for the winch drive unit 350.

As indicated in the diagram, the control arrangement 12 can receive additional relevant input 125 such as wind speed and/or wind direction, so that the damping response R1, R2 can be computed to take these parameters into consideration.

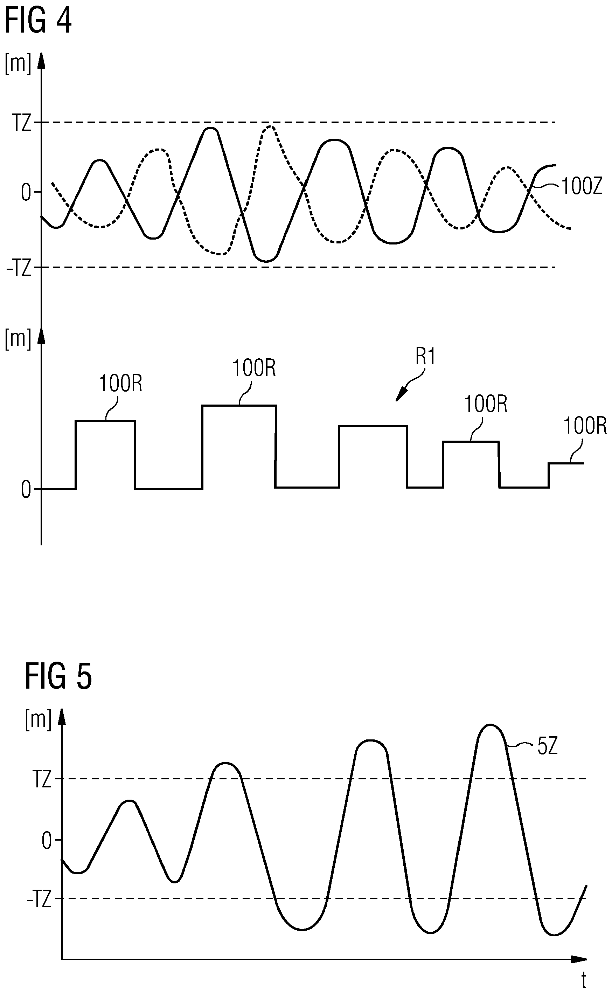

Figure 4 illustrates this approach to "damping" vertical oscillations M_{Z} of the rotor blade 20. By processing the sensor output 100, a developing oscillatory vertical component 100Z is detected, represented here as an essentially sinusoidal curve with increasing amplitude, for a point on one side of the lifting yoke 30. As explained above, such an oscillatory vertical component 100Z can be measured directly (for example by a suitably placed accelerometer), or can be inferred (for example from data generated by an inertial measurement unit or gyroscope). Since the lifting yoke oscillates about a fulcrum, a oscillatory vertical component 100Z for a similar point at the tip-end side of the lifting yoke 30 will be opposite in sign and similar in magnitude, as indicated by the dotted line.

For safe landing of the rotor blade 20, the lifting yoke oscillation amplitude may not exceed an acceptable predefined threshold TZ as indicated by the horizontal dashed lines, and should preferably be well below that threshold. Therefore, once the lifting yoke 30 is near hub height, the control arrangement 12 preferably continually monitors the vertical motion of the lifting yoke 30. Any oscillation 100Z is countered by a tagline response R1 as indicated, which comprises a series of alternately high and low pulling force adjustment values 100R. The tagline response R1 (as a percentage of maximum tagline tension) is computed to ensure that any upward movement of the root-end side of the lifting yoke 30 is actively countered by a downward pull (increased pulling force) of the respective tagline 33; the subsequent downward movement of that side of the lifting yoke 30 is followed by a decreased pulling force of that tagline 33. A similar tagline response R2 (opposite sign, similar magnitude) is computed to counter any upward movement of the tip-end side of the lifting yoke 30. The effect of the tagline response R1, R2 is to reduce or damp the amplitude of the oscillatory vertical component 100Z of the lifting yoke motion, quickly returning it to a safe level within the accepted threshold TZ, so that the rotor blade can be safely landed at the hub 21. Once the landing procedure is completed, i.e. the root end of the rotor blade has engaged with its pitch ring, the control arrangement 12 preferably ceases to adjust the vertical tagline pulling forces.

As explained above, the tagline response R1, R2 can be understood as a series of winch commands to pay out and retract each vertical tagline 33 as necessary to counteract vertical oscillating motion of the lifting yoke 30. Preferably, the pulling force adjustments R1, R2 of the vertical taglines 33 are applied in such a way that a desired minimum tension 33T or pulling force is maintained in the taglines 33, i.e. the amount and rate at which a tagline 33 is paid out or retracted are computed so that the tagline 33 is neither too taut nor too slack.

By quickly damping any vertical oscillation of the lifting yoke 30 and therefore also any vertical oscillation of the rotor blade 20 about its centre of mass, the inventive lifting arrangement 1 effectively and quickly suppresses vertical oscillations of the rotor blade 20, as indicated by the decreasing amplitude, which remains within the safe magnitude TZ. The root end of the rotor blade 20 can therefore be safely moved towards the hub 21 of the wind turbine 2 to complete the landing manoeuvre.

Figure 5 illustrates a problem that may arise when using the configuration of Figure 2 outside of safe wind speed conditions, or to lift a longer rotor blade. A strong lift force F_{L} on the rotor blade can initiate a significant vertical oscillatory motion, and the curve 5Z represents the vertical displacement of any point on the rotor blade 20. Since the taglines of Figure 2 can only be controlled to maintain a predetermined tension 33T, the oscillation amplitude may increase beyond the acceptable threshold TZ. Since the rotor blade 20 cannot be safely landed at its pitch ring 21P under such conditions, a landing manoeuvre will generally not be initiated when wind speeds are outside of the safe limits. If unacceptable rotor blade oscillations M_{Z} occur when initially favourable wind speeds increase during a lifting manoeuvre that is already underway, it is necessary to cancel the manoeuvre, lower the rotor blade 20 back to deck level, and wait for wind conditions to improve. The need to wait for an acceptable "safe landing window" can add hours or even days to the installation procedure, resulting in unacceptably high costs.

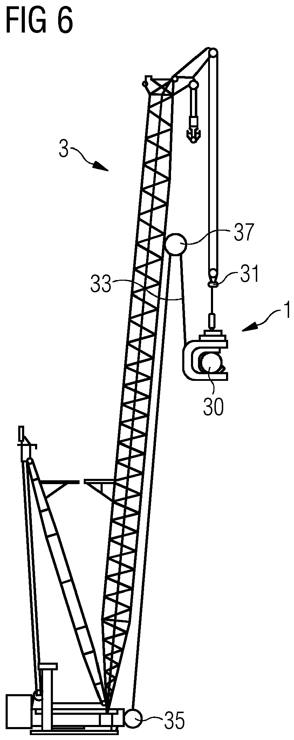

Figures 6 - 8 show alternative tagline configurations. In Figure 6, the tagline winches 35 are also mounted at the base of the crane 3, and each vertical tagline 33 passes over a deflection roller 37 mounted on the crane 3 at a height above hub height. A deflection roller can be useful in various stages of the rotor blade installation, for example it can facilitate lifting the rotor blade from a storage rack.

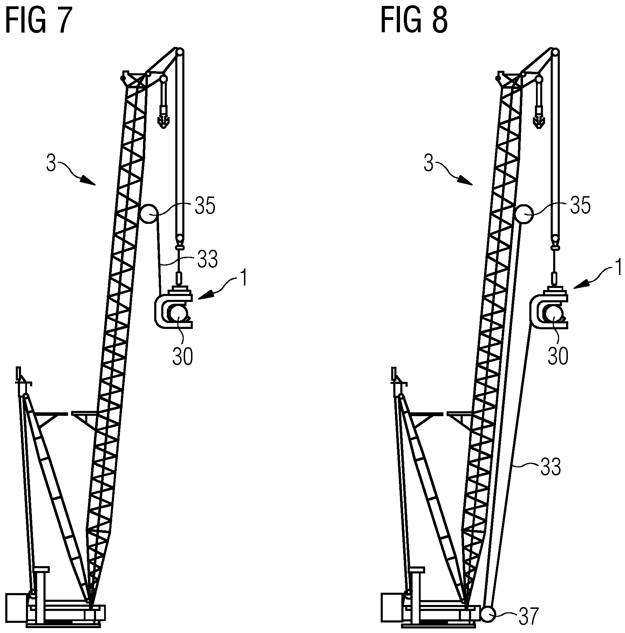

In Figure 7, the winches 35 are installed high up on the crane 3, and the vertical taglines 33 extend from the lifting yoke 30 upward towards the winches 35. In Figure 8, the tagline winches 35 are mounted high up on the crane 3, and each vertical tagline 33 passes over a deflection roller 37 mounted at the base of the crane 3.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module. Any pronoun denoting a specific gender shall be understood to apply equally to any gender identity.

## Claims

1. A lifting arrangement (1) for handling a wind turbine rotor blade (20) using a crane (3), which lifting arrangement (1) comprises
- a lifting yoke (30) for suspending a rotor blade (20) from a crane hook (31);
- a sensor arrangement (10) configured to measure the spatial orientation of the lifting yoke (30);
- an evaluation module (121) configured to detect vertical oscillation (100Z) of the lifting yoke (30) on the basis of the sensor output (100);
- a response module (122) configured to compute a damping response (R1, R2) to counteract a detected vertical oscillation (100Z); and
- a means (33, 35) of applying the damping response (R1, R2) to the lifting yoke (30).

2. A lifting arrangement according to the preceding claim, wherein the centre of mass of the lifting yoke (30) essentially coincides with the centre the centre of mass (COM₂₀) of the rotor blade (20) .

3. A lifting arrangement according to any of the preceding claims, wherein the sensor arrangement (10) comprises any of: an inertial measurement unit; a number of accelerometers, a number of gyroscopes.

4. A lifting arrangement according to any of the preceding claims, comprising a vertical tagline arrangement (33) extending between the lifting yoke (30) and the crane (3), and wherein the computed damping response (R1, R2) comprises a series of pulling force adjustment values (100R) for a vertical tagline (33).

5. A lifting arrangement according to the preceding claim, wherein the vertical tagline arrangement comprises
- at least one vertical tagline (33) extending between the lifting yoke (30) and a tagline winch (35) mounted on the crane (3); and
- a winch drive unit (350) configured to apply the computed damping response (R1, R2) to its vertical tagline (33).

6. A lifting arrangement according to claim 4 or claim 5, wherein the vertical tagline arrangement comprises a first vertical tagline (33) connected to one side (301) of the lifting yoke (30) and a second vertical tagline (33) connected to the other side (302) of the lifting yoke (30).

7. A lifting arrangement according to any of claims 4 to 6, wherein the damping response (R1, R2) comprises a first damping response (R1) for the first vertical tagline (33) and a second damping response (R2) for the second vertical tagline (33).

8. A lifting arrangement according to any of claims 4 to 7, wherein a vertical tagline (33) passes over a deflection roller (37) mounted on the crane (3).

9. A lifting arrangement according to any of claims 4 to 8, wherein a tagline winch (35) is mounted at the base of the crane (3).

10. A method of handling a wind turbine rotor blade (20) using a crane (3),
- arranging a lifting yoke (30) about the rotor blade (20) and suspending the lifting yoke (30) from a crane hook (31) ;
- providing a sensor arrangement (10) to measure the spatial orientation of the lifting yoke (30) during a lifting manoeuvre;
- evaluating the sensor output (100) to detect vertical oscillation (100Z) of the lifting yoke (30);
- computing a damping response (R1, R2) to counteract a detected vertical oscillation (100Z); and
- applying the damping response (R1, R2) to the lifting yoke (30) during the lifting manoeuvre.

11. A method according to the preceding method claim, wherein a first damping response (R1) is computed for the side (301) of the lifting yoke (30) nearest the rotor blade root end, and a second damping response (R2) is computed for the opposite side (302) of the lifting yoke (30).

12. A method according to any of the preceding method claims, wherein the damping response (R1, R2) is computed to reduce vertical oscillation (100Z) of the lifting yoke (30) towards a target parameter (TZ).

13. A method according to the preceding claim, wherein the target parameter is any of: a maximum vertical oscillation amplitude (TZ) of the lifting yoke (30); a maximum vertical oscillation amplitude of the rotor blade root end; a maximum vertical inclination angle of the lifting yoke (30).

14. A method according to any of the preceding method claims, wherein the damping response (R1, R2) is computed under consideration of wind speed and/or wind direction.

15. A computer program product comprising a computer program that is directly loadable into a memory of a control unit (12) of a lifting arrangement (1) according to any of claims 1 to 9, and which comprises program elements for evaluating the sensor output (100) to detect vertical oscillation (100Z) of the lifting yoke (30) and for computing the damping response (R1, R2) when the computer program is executed by the control unit (12).
